# EUROPÄISCHE PATENTSCHRIFT

(11) **EP 1 203 483 B1**
(45) Veröffentlichungstag und Bekanntmachung des Hinweises auf die Patenterteilung: **19.01.2005**
(21) Anmeldenummer: 00963892.5
(22) Anmeldetag: 08.08.2000
(51) Int. Cl.: H04M 3/24, H04M 3/487, H04M 3/493, H04M 3/523

(54) **VERFAHREN UND VORRICHTUNG ZUR ERHÖHUNG DER AUSFALLSICHERHEIT VON AN VERMITTLUNGSSTELLEN ANGESCHLOSSENEN AUSKUNFTSSTELLEN**
METHOD AND DEVICE FOR INCREASING THE FAIL SAFETY OF INFORMATION DESKS CONNECTED TO EXCHANGES
PROCEDE ET DISPOSITIF POUR ACCROITRE L'INSENSIBILITE AUX DEFAILLANCES D'UN CENTRE D'APPEL RACCORDE A DES CENTRAUX TELEPHONIQUES

(30) Priorität: 10.08.1999 DE 19937675
(43) Veröffentlichungstag der Anmeldung: 08.05.2002
(73) Patentinhaber: SIEMENS AKTIENGESELLSCHAFT, 80333 München (DE)
(72) Erfinder: ROSCHER, Gerhard, A-1220 Wien (AT); BRUNNER, Roland, A-1220 Wien (AT)
(86) Internationale Anmeldenummer: PCT/DE2000/002643
(87) Internationale Veröffentlichungsnummer: WO 2001/011855

(56) Entgegenhaltungen:
- US-A- 5 848 143
- US-A- 5 910 982

## Beschreibung

### Technisches Gebiet:

Die Erfindung bezieht sich auf ein Verfahren zum Betrieb einer Auskunftsstelle in einem Telekommunikationsnetz, wobei
- die Auskunftsstelle an eine Vermittlungsstelle angeschlossen ist,
- die Auskunftsstelle sowohl einen Großrechner und zumindest einen Auskunftsplatz mit zumindest einem Telekommunikationsendgerät umfaßt,
- der Großrechner mit der Vermittlungsstelle verbunden ist,
- der Auskunftsplatz über Datenübertragungseinrichtungen an die Vermittlungsstelle und an den Großrechner angeschlossen ist,
- der Großrechner laufend die Betriebsbereitschaft der Telekommunikationsendgeräte einschließlich des Datenübertragungsweges zu diesen überprüft,
- die Anrufverteilung zu den Auskunftsplätzen im störungsfreien Betrieb auf dem Großrechner abläuft und
- die grundlegende Funktion der Verteilung der einlangenden Anrufe und der Aufbau einer Sprechverbindung zu einem Telekommunikationsendgerät des Auskunftsplatzes im Störfall in der Vermittlungsstelle abläuft,

Weiterhin betrifft die Erfindung eine Anordnung zur Durchführung des erfindungsgemäßen Verfahrens.

### Stand der Technik:

Die angesprochenen Auskunftsstellen haben im wesentlichen die Aufgabe, Rufnummernauskünfte zu erteilen und, falls erforderlich; die Verbindung zu dem vom Anrufer gewünschten Teilnehmer herzustellen. Darüber hinaus bieten diese Stellen üblicherweise eine Vielzahl von zusätzlichen Diensten an, die beispielsweise das Schalten von Telefonkonferenzen, Simultanübersetzungen oder die Kontrolle der Gesprächsdauer umfassen. Die Funktionalität einer solchen Auskunftsstelle wird auch durch den Begriff "Call Center" beschrieben.

Mit dem Einsatz eines Großrechners wird der Zweck verfolgt, einerseits die Zustandsmeldungen der angeschlossenen Auskunftsplätze wie zum Beispiel "frei" oder "belegt" zu sammeln, zentral zu speichern und aufgrund dieser Informationen einen einlangenden Anruf mit Hilfe der Vermittlungsstelle an einen Auskunftsplatz durchzuschalten, andererseits jene Prozesse und Daten zur Verfügung zu stellen, die zentral vorhanden sein müssen, um die an eine solche Auskunftsstelle gestellten Anforderungen erfüllen zu können, beziehungsweise auch die Anbindung an externe Datennetze zu ermöglichen. Ein Großrechner mit den erwähnten Eigenschaften ist auch unter dem Begriff "Computer Telephone Integration Server" oder kurz "CTI-Server" bekannt.

Durch die hohe zu bewältigende Anzahl der Anrufer, beziehungsweise die Notwendigkeit einer Auskunftsstelle für den Telefonverkehr, stellt ein Ausfall einer solchen ein schwerwiegendes technisches Problem dar.

Ein solcher Totalausfall entsteht bei herkömmlichen Auskunftsstellen bereits bei Versagen einer der beinhalteten Bestandteile, sei es nun der Großrechner, die Datenleitung zwischen Vermittlungsstelle und Großrechner, die Datenleitungen vom Großrechner zu den einzelnen Auskunftsplätzen oder die Personal Computer an den Auskunftsplätzen. Das Versagen eines Bestandteils kann beispielsweise durch den Ausfall des betreffenden Stromversorgungsnetzes begründet sein.

Aus der US 5848143 "Communications system using a central controller to control at least one network and agent system" vom 4.März 1996 ist weiterhin bekannt, dass die Ausfallsicherheit einer Auskunftsstelle durch die Verwendung eines "Primary Central Controllers" und eines dazu identisch aufgebauten "Redundant Central Controllers" gesteigert werden kann. Ein Central Controller übernimmt dabei typische Aufgaben einer Auskunftsstelle, beispielsweise die Generierung von Steuersignalen für die Verteilung der Anrufe zu den Auskunftsplätzen, sowie Abfrage von Zustand und Auslastung eines Auskunftsplatzes. Der Primary Central Controller und der Redundant Central Controller sind über eine Datenleitung miteinander verbunden, über welche sogenannte "Heartbeat Messages" ausgetauscht werden. Fällt beispielsweise der Primary Central Controller aus, wird diese Nachricht, deren Empfang beim Redundant Central Controller regelmäßig überprüft wird, nicht mehr gesendet. Kann eine Verbindung vom Redundant Central Controller zum Primary Central Controller auch über einen anderen Weg als die erwähnte Datenleitung nicht aufgebaut werden, so wird von einem Ausfall des Primary Central Controllers ausgegangen. In Folge werden die Aufgaben des Primary Central Controllers vom Redundant Central Controller wahrgenommen, so lange bis die Betriebsfähigkeit des Primary Central Controllers wieder gegeben ist.

Die Ausfallsicherheit wird nach dem Stand der Technik im wesentlichen durch Doppelung der betroffenen Komponenten erzielt, wobei die Ausfallsicherheit umso größer ist, je mehr Komponenten in doppelter Ausführung zur Verfügung stehen.

Nachteilig ist dabei jedoch, dass diese Lösung mit vergleichsweise hohem technischen Aufwand verbunden ist.

Der Erfindung liegt daher die Aufgabe zugrunde, ein Verfahren zum Betrieb einer Auskunftsstelle der eingangs genannten Art anzugeben, bei dem die angeführten Nachteile nicht auftreten.

### Darstellung der Erfindung:

Dies geschieht erfindungsgemäß mit einem Verfahren zum Betrieb einer Auskunftsstelle der erwähnten Art, wobei zusätzlich
- die Vermittlungsstelle laufend die Betriebsbereitschaft des Großrechners und der Telekommunikationsendgeräte einschließlich der Kommunikationsverbindungen zu diesen überprüft und eine eventuell auftretende Störung erkennt,
- der Großrechner eine eventuell auftretende Störung der Telekommunikationsendgeräte oder der Datenübertragungswege zu diesen an die Vermittlungsstelle meldet und
- bei Unerreichbarkeit der Auskunftsplätze über den Großrechner die Vermittlungsstelle zumindest die Anrufverteilung und den Aufbau einer Sprechverbindung zu einem Telekommunikationsendgerät des Auskunftsplatzes durchführt.

Ein Vorteil dabei ist, daß die Vermittlungsstelle im störungsfreien Betrieb der Auskunftsstelle vergleichsweise gering belastet wird. Vorteilhaft ist beispielsweise aber auch, daß bei einem Ausfall des Großrechners oder einer an diesen angeschlossenen Leitungen die für eine Auskunftsstelle unbedingt notwendige Funktion der Anrufverteilung von der Vermittlungsstelle übernommen wird. Daraus resultiert eine Erhöhung der Ausfallsicherheit ohne Vervielfachung des Großrechners.

Eine besonders vorteilhafte Ausgestaltung der Erfindung sieht vor, daß auch im störungsfreien Betrieb innerhalb der Vermittlungsstelle zumindest Zustandsmeldungen der Auskunftsplätze verarbeitet werden.

Vorteilhaft ist es ferner, wenn ein durch einen zumindest teilweisen Ausfall des Großrechners oder einer an diesen angeschlossenen Leitung begründeter eingeschränkter Betrieb der Auskunftsstelle so lange von der Vermittlungsstelle alleine aufrechterhalten wird, bis die Bereitschaft zur Wiederaufnahme des Normalbetriebes vom Großrechner vorliegt. Die Umschaltung vom Normalbetrieb in den eingeschränkten Betrieb und umgekehrt wird also vollautomatisch von dem in der Vermittlungsstelle laufenden Programm durchgeführt, und erfolgt ohne weiteres Zutun des für die Vermittlungsstelle verantwortlichen Personals. ,

Eine besonders vorteilhafte Ausgestaltung der Erfindung sieht vor, daß bei unerreichbarkeit eines Telekommunikationsendgerätes des Auskunftsplatzes zumindest die Anrufverteilung und der Aufbau einer Sprechverbindung zu einem anderen, betriebsbereiten Telekommunikationsendgerätes des selben Auskunftsplatzes durchführt wird. Durch die Doppelung der Telekommunikationsendgeräte und der Übertragungswege zur Vermittlungsstelle wird die Ausfallsicherheit der Auskunftsstelle wesentlich erhöht.

Die Aufgabe der Erfindung wird weiterhin mit einer Anordnung zur Durchführung des erfindungsgemäßen Verfahrens gelöst,
- bei der die Auskunftsstelle an eine Vermittlungsstelle angeschlossen ist,
- bei der die Auskunftsstelle sowohl einen Großrechner und zumindest einen Auskunftsplatz mit zumindest einem Telekommunikationsendgerät umfaßt,
- bei der der Großrechner mit der Vermittlungsstelle verbunden ist,
- bei der der Auskunftsplatz über Datenübertragungseinrichtungen an die Vermittlungsstelle und an den Großrechner angeschlossen ist,
- bei der der Großrechner Mittel zur laufenden Überprüfung der Betriebsbereitschaft der Telekommunikationsendgeräte einschließlich der Datenübertragungswege zu diesen umfasst,
- bei der für den störungsfreien Betrieb im Großrechner Mittel zur Anrufverteilung zu den Auskunftsplätzen vorhanden sind und
- bei der für den Störfall Mittel für die,grundlegende Funktion der Verteilung der einlangenden Anrufe und den Aufbau einer Sprechverbindung zu einem Telekommunikationsendgerät des Auskunftsplatzes in der Vermittlungsstelle vorhanden sind,
- bei der die Vermittlungsstelle Mittel zur laufenden Überprüfung der Betriebsbereitschaft des Großrechners und der Telekommunikationsendgeräte einschließlich der Kommunikationsverbindungen zu diesen, sowie Mittel zur Erkennung einer eventuell auftretenden Störung umfasst,
- bei der der Großrechner Mittel umfasst, eine eventuell auftretenden Störung der Telekommunikationsendgeräte oder der Datenübertragungswege zu diesen an die Vermittlungsstelle zu melden, und
- bei der die Vermittlungsstelle Mittel zur Anrufverteilung und zum Aufbau einer Sprechverbindung zu einem Telekommunikationsendgerät des Auskunftsplatzes bei Unerreichbarkeit der Auskunftsplätze über den Großrechner umfasst.

Eine vorteilhafte Ausgestaltung der Erfindung sieht vor, daß als Telekommunikationsendgerät des Auskunftsplatzes ein Personal Computer vorgesehen ist, welcher mit Mitteln zur Spracheingabe und Sprachausgabe, sowie mit Mitteln zur Anbindung an das Telekommunikationsnetz und Mitteln zur Datenübertragung zum Großrechner ausgestattet ist. Als Mittel zur Spracheingabe kann beispielsweise ein Mikrophon, zur Sprachausgabe ein Kopfhörer vorgesehen sein. Für die Anbindung an das Telekommunikationsnetz und an das Datennetz werden beispielhaft Einschubkarten eingesetzt, welche im wesentlichen die Umsetzung der Daten in ein dem jeweiligen Übertragungsprotokoll entsprechendes serielles Datenformat ermöglichen. Durch die gleichzeitige Anbindung an ein Telekommunikationsnetz und ein Computer-Datennetz können die an das Telekommunikationsendgerät gestellten Anforderungen besonders anwenderfreundlich erfüllt werden. Darüber hinaus kann bei Ausfall des Datenübertragungsweges zum Großrechner ein eingeschränkter Betrieb aufrechterhalten werden. Die Funktionalität im eingeschränkten Betrieb hängt dabei wesentlich davon ab, welche Daten und Prozesse dezentral im Personal Computer des Auskunftsplatzes integriert sind. Im Zuge der Offenbarung sei darauf hingewiesen, daß durch die zunehmende Einbindung von Sprachdaten in die Computer-Datennetze nicht zwingenderweise ein Unterschied zwischen den Datenprotokollen des Telekommunikationsnetzes und des Datennetzes zum Großrechner bestehen muß. Diese Zusammenführung ist auch unter dem Begriff "Voice over Internet Protocol" bekannt.

Besonders vorteilhaft ist es, wenn der Auskunftsplatz sowohl aus einem Telefon, als auch einem Personal Computer mit den erwähnten Eigenschaften besteht. Zusätzlich zu den bereits angeführten Vorteilen bleibt auch bei Unerreichbarkeit eines der beiden Telekommunikationsendgeräte die volle Funktionalität des Auskunftsplatzes erhalten. Überdies kann ein Notbetrieb selbst bei einem Totalausfall des Personal Computers, beispielsweise aufgrund eines Stromausfalles, aufrechterhalten werden, da das Telefon seitens der Vermittlungsstelle mit der nötigen Energie versorgt wird.

Günstig ist es, wenn die Anbindung der Telekommunikationsendgeräte des Auskunftsplatzes zur Vermittlungsstelle mittels ISDN-Basisanschlüssen erfolgt, da im entsprechenden Datenübertragungsprotokoll ein Signalisierungskanal und damit verbundene, für eine Auskunftsstelle sinnvolle Dienste festgelegt sind.

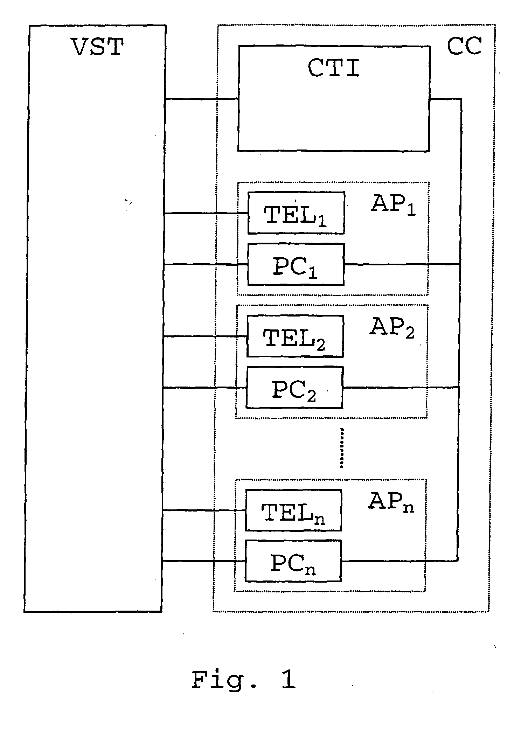

### Beschreibung der Zeichnung:

Die Erfindung wird anhand der Figur näher erläutert, welche die beispielhafte Anordnung der Bestandteile einer Auskunftsstelle zeigt.

### Bester Weg zur Ausführung der Erfindung:

Die in der Figur dargestellte Auskunftsstelle CC umfaßt einen Großrechner CTI und mehrere gleichartig aufgebaute Auskunftsplätze AP1 bis APn, die jeweils aus einem Telefon TEL und einem Personal Computer PC bestehen. Sowohl die Telefone TEL1 bis TELn, als auch die Personal Computer PC1 bis PCn, sind beim Ausführungsbeispiel über ISDN-Basisanschlüsse mit der Vermittlungsstelle VST verbunden, denkbar sind jedoch auch analoge Verbindungsleitungen. Die Personal Computer PC1 bis PCn sind zusätzlich über Datenleitungen, die in einer Busstruktur zusammengefaßt sind, an den Großrechner CTI angeschlossen. Der Großrechner CTI ist ebenfalls über eine Datenleitung mit der Vermittlungsstelle VST verbunden.

Die Funktion der beispielhaften Auskunftsstelle ist wie folgt, wobei einerseits der Normalbetrieb, aber auch eingeschränkte Betriebsarten, die durch Ausfall zumindest eines Bestandteiles der Auskunftsstelle begründet sind, erläutert werden:

Im Normalbetrieb wird ein einlangender Anruf von einem in der Vermittlungsstelle VST laufenden Programm, dem sogenannten Anrufverteilerprogramm, an das auf dem Großrechner CTI laufenden Programm, dem Zentralprogramm, gemeldet. Aufgrund der auf dem Großrechner CTI zur Verfügung stehenden Informationen, welche auch die Zustände "frei" und "belegt" der Auskunftsplätze AP1 bis APn beinhalten, wird vom Zentralprogramm bestimmt, an welchen Auskunftsplatz AP1 bis APn der Anruf weitergeleitet werden soll. Darüber hinaus werden mit Hilfe des Großrechners CTI auch die zum Vollbetrieb der Auskunftsstelle CC notwendigen Daten und Prozesse, sowie die Anbindung an externe Dienstleister, zur Verfügung gestellt. Das Personal an dem betreffenden Auskunftsplatz AP kann nun unter Zuhilfenahme des Personal Computers PC die von ihnen gewünschte Dienstleistung erbringen. Die Zustandsmeldungen der Auskunftsplätze AP1 bis APn werden laufend sowohl vom Zentralprogramm, als auch vom Anrufverteilerprogramm erfaßt. Letzteres hat über die Sammlung und Speicherung dieser Zustandsmeldungen hinaus im Normalbetrieb keine weiteren Aufgaben.

Fällt der Großrechner CTI oder eine an diesen angeschlossene Leitungen aus, so wird dies mittels Anrufverteilerprogramm erkannt. Daraufhin übernimmt dieses die für eine Auskunftsstelle CC unbedingt notwendige Funktion der Anrufverteilung, und stellt einlangende Anrufe zum Telefon TEL oder zum Personal Computer PC des jeweiligen Auskunftsplatzes AP durch. Wenn der Normalbetrieb in Folge der Behebung des Schadens wieder aufgenommen werden kann, so wird eine entsprechende Meldung vom zentralprogramm an das Anrufverteilerprogramm geschickt. Letzteres beschränkt daraufhin seine Funktionalität auf das im Normalbetrieb gegebene Maß.

Bei Ausfall eines Telefons TEL oder der daran angeschlossenen Leitung zur Vermittlungsstelle VST eines Auskunftsplatzes AP, bleibt die volle Funktionalität der Auskunftsstelle CC erhalten. Desgleichen gilt für den Ausfall eines Personal Computers PC oder einer an diesen angeschlossenen Datenleitung, wobei Dienste, die typischerweise den Einsatz eines Computers verlangen, nicht oder nur eingeschränkt erbracht werden können.

## Patentansprüche

1. Verfahren zum Betrieb einer Auskunftsstelle (CC) in einem Telekommunikationsnetz, wobei
- die Auskunftsstelle (CC) an eine Vermittlungsstelle (VST) angeschlossen ist,
- die Auskunftsstelle (CC) sowohl einen Großrechner (CTI) und zumindest einen Auskunftsplatz (AP) mit zumindest einem Telekommunikationsendgerät umfaßt,
- der Großrechner (CTI) mit der Vermittlungsstelle (VST) verbunden ist,
- der Auskunftsplatz (AP) über Datenübertragungseinrichtungen an die Vermittlungsstelle (VST) und an den Großrechner (CTI) angeschlossen ist,
- der Großrechner (CTI) laufend die Betriebsbereitschaft der Telekommunikationsendgeräte einschließlich des Datenübertragungsweges zu diesen überprüft,
- die Anrufverteilung zu den Auskunftsplätzen (AP1 bis APn) im störungsfreien Betrieb auf dem Großrechner (CTI) abläuft und
- die grundlegende Funktion der Verteilung der einlangenden Anrufe und der Aufbau einer Sprechverbindung zu einem Telekommunikationsendgerät des Auskunftsplatzes (AP) im Störfall in der Vermittlungsstelle (VST) abläuft,
**dadurch gekennzeichnet,**
- **daß** die Vermittlungsstelle (VST) laufend die Betriebsbereitschaft des Großrechners (CTI) und der Telekommunikationsendgeräte einschließlich der Kommunikationsverbindungen zu diesen überprüft und eine eventuell auftretende Störung erkennt,
- **daß** der Großrechner (CTI) eine eventuell auftretende Störung der Telekommunikationsendgeräte oder der Datenübertragungswege zu diesen an die Vermittlungsstelle (VST) meldet und
- **daß** bei Unerreichbarkeit der Auskunftsplätze (AP) über den Großrechner (CTI) die Vermittlungsstelle (VST) zumindest die Anrufverteilung und den Aufbau einer Sprechverbindung zu einem Telekommunikationsendgerät des Auskunftsplatzes (AP) durchführt.

2. Verfahren nach Anspruch 1,
**dadurch gekennzeichnet , daß** auch im störungsfreien Betrieb innerhalb der Vermittlungsstelle (VST) zumindest Zustandsmeldungen der Auskunftsplätze (AP1 bis APn) verarbeitet werden.

3. Verfahren nach Anspruch 1,
**dadurch gekennzeichnet, daß** ein durch einen zumindest teilweisen Ausfall des Großrechners (CTI) oder einer an diesen angeschlossenen Leitung begründeter eingeschränkter Betrieb der Auskunftsstelle (CC) so lange von der Vermittlungsstelle (VST) alleine aufrechterhalten wird, bis die Bereitschaft zur Wiederaufnahme des Normalbetriebes vom Großrechner (CTI) vorliegt.

4. Verfahren nach Anspruch 1,
**dadurch gekennzeichnet, daß** bei Unerreichbarkeit eines Telekommunikationsendgerätes des Auskunftsplatzes (AP) zumindest die Anrufverteilung und der Aufbau einer Sprechverbindung zu einem anderen, betriebsbereiten Telekommunikationsendgerätes des selben Auskunftsplatzes (AP) durchführt wird.

5. Auskunftsstelle (CC), welche zur Durchführung aller Schritte eines Verfahrens nach Anspruch 1 bis 4 vorbereitet ist und
- bei der die Auskunftsstelle (CC) an eine Vermittlungsstelle (VST) angeschlossen ist,
- bei der die Auskunftsstelle (CC) sowohl einen Großrechner (CTI) und zumindest einen Auskunftsplatz (AP) mit zumindest einem Telekommunikationsendgerät umfaßt,
- bei der der Großrechner (CTI) mit der Vermittlungsstelle (VST) verbunden ist,
- bei der der Auskunftsplatz (AP) über Datenübertragungseinrichtungen an die Vermittlungsstelle (VST) und an den Großrechner (CTI) angeschlossen ist,
- bei der der Großrechner (CTI) Mittel zur laufenden Überprüfung der Betriebsbereitschaft der Telekommunikationsendgeräte einschließlich der Datenübertragungswege zu diesen umfasst,
- bei der für den störungsfreien Betrieb im Großrechner (CTI) Mittel zur Anrufverteilung zu den Auskunftsplätzen (AP1 bis APn) vorhanden sind und
- bei der für den Störfall Mittel für die grundlegende Funktion der Verteilung der einlangenden Anrufe und den Aufbau einer Sprechverbindung zu einem Telekommunikationsendgerät des Auskunftsplatzes (AP) in der Vermittlungsstelle (VST) vorhanden sind,
**dadurch gekennzeichnet,**
- **daß** die Vermittlungsstelle (VST) Mittel zur laufenden Überprüfung der Betriebsbereitschaft des Großrechners (CTI) und der Telekommunikationsendgeräte einschließlich der Kommunikationsverbindungen zu diesen, sowie Mittel zur Erkennung einer eventuell auftretenden Störung umfasst,
- **daß** der Großrechner (CTI) Mittel umfasst, eine eventuell auftretenden Störung der Telekommunikationsendgeräte oder der Datenübertragungswege zu diesen an die Vermittlungsstelle (VST) zu melden, und
- **daß** die Vermittlungsstelle (VST) Mittel zur Anrufverteilung und zum Aufbau einer Sprechverbindung zu einem Telekommunikationsendgerät des Auskunftsplatzes (AP) bei Unerreichbarkeit der Auskunftsplätze (AP) über den Großrechner (CTI) umfasst.

6. Auskunftsstelle (CC) nach Anspruch 5,
**dadurch gekennzeichnet , daß** als Telekommunikationsendgerät des Auskunftsplatzes (AP) ein Personal Computer (PC) vorgesehen ist, welcher Mittel zur Spracheingabe und Sprachausgabe, Mittel zur Anbindung an das Telekommunikationsnetz und Mittel zur Datenübertragung zum Großrechner (CTI) umfaßt.

7. Auskunftsstelle (CC) nach Anspruch 5,
**dadurch gekennzeichnet, daß** als Telekommunikationsendgeräte des Auskunftsplatzes (AP) ein Telefon (TEL) und ein Personal Computer (PC) vorgesehen sind, und daß der Personal Computer (PC) Mittel zur Spracheingabe und Sprachausgabe, Mittel zur Anbindung an das Telekommunikationsnetz und Mittel zur Datenübertragung zum Großrechner (CTI) umfaßt.

8. Auskunftsstelle (CC) nach Anspruch 5,
**dadurch gekennzeichnet, daß** das zumindest ein Telekommunikationsendgerät des Auskunftsplatzes (AP) über zumindest einen ISDN-Basisanschluß mit der Vermittlungsstelle (VST) verbunden ist.

## Claims

1. Method for operating an information desk (CC) in a telecommunications network, whereby
- the information desk (CC) is connected to an exchange (VST),
- the information desk (CC) comprises a mainframe computer (CTI) and at least one information point (AP) with at least one telecommunications terminal,
- the mainframe computer (CTI) is connected to the exchange (VST),
- the information point (AP) is connected to the exchange (VST) and to the mainframe computer (CTI) via data transfer devices,
- the mainframe computer (CTI) continuously checks the operability of the telecommunications terminals including the data transfer route to said telecommunications terminals,
- the distribution of calls to the information points (AP1 to APn) is carried out on the mainframe computer (CTI) during fault-free operation, and
- the basic function of distributing incoming calls and setting up a voice connection to a telecommunications terminal at the information point (AP) is carried out in the exchange (VST) in the event of a fault,
**characterized in that**
- the exchange (VST) continuously checks the operability of the mainframe computer (CTI) and of the telecommunications terminals including the communication connections to these, and detects any faults that may occur,
- the mainframe computer (CTI) notifies the exchange (VST) of any faults that may occur on the telecommunications terminals or on the data transfer routes to these, and
- if the information points (AP) cannot be reached via the mainframe computer (CTI), the exchange (VST) carries out at least the function of call distribution and of setting up a voice connection to a telecommunications terminal of the information point (AP).

2. Method according to Claim 1,
**characterized in that** at least status reports on the information points (AP1 to APn) are also processed within the exchange (VST) during fault-free operation.

3. Method according to Claim 1,
**characterized in that** limited operation of the information desk (CC) which is caused by at least partial failure of the mainframe computer (CTI) or of a line connected to said mainframe computer, is maintained by the exchange (VST) alone until the mainframe computer (CTI) is ready to resume normal operation.

4. Method according to Claim 1,
**characterized in that**, if a telecommunications terminal of the information point (AP) cannot be reached, at least the function of call distribution and of setting up a voice connection to another, operable, telecommunications terminal at the same information point (AP), is effected.

5. Information desk (CC), which is prepared for implementing all the stages of a method according to Claims 1 to 4, and
- in which the information desk (CC) is connected to an exchange (VST),
- in which the information desk (CC) incorporates a mainframe computer (CTI) as well as at least one information point (AP) with at least one telecommunications terminal,
- in which the mainframe computer (CTI) is connected to the exchange (VST),
- in which the information point (AP) is connected to the exchange (VST) and to the mainframe computer (CTI) via data transfer devices,
- in which the mainframe computer (CTI) incorporates means for continuously checking the operability of the telecommunications terminals including the data transfer routes to these,
- in which means for call distribution to the information points (AP1 to APn) is present in the mainframe computer (CTI) for use during fault-free operation, and
- in which means for the basic function of distributing incoming calls and setting up a voice connection to a telecommunications terminal of the information point (AP) are present in the exchange (VST) for use in the event of a fault,
**characterized in that**
- the exchange (VST) incorporates means for continuously checking the operability of the mainframe computer (CTI) and of the telecommunications terminals including the communications connections to these, and means for detecting any faults that may occur,
- the mainframe computer (CTI) incorporates means for notifying the exchange (VST) of any faults that may occur on the telecommunications terminals or on the data transfer routes to these, and
- the exchange (VST) incorporates means for call distribution and for setting up a voice connection to a telecommunications terminal of the information point (AP) if the said information point (AP) cannot be reached via the mainframe computer (CTI).

6. Information desk (CC) according to Claim 5,
**characterized in that** a personal computer (PC) is provided as a telecommunications terminal of the information point (AP), said personal computer (PC) incorporating means for voice input and voice output, means for connection to the telecommunications network, and means for data transfer to the mainframe computer (CTI).

7. Information desk (CC) according to Claim 5,
**characterized in that** a telephone (TEL) and a personal computer (PC) are provided as telecommunications terminals of the information point (AP), and **in that** the personal computer (PC) incorporates means for voice input and voice output, means for connection to the telecommunications network, and means for data transfer to the mainframe computer (CTI).

8. Information desk (CC) according to Claim 5,
**characterized in that** at least one communication device of the information point (AP) is connected to the exchange (VST) via at least one ISDN basic access.

## Revendications

1. Procédé pour faire fonctionner un centre d'appel (CC) d'un réseau de télécommunications, dans lequel
- le centre d'appel (CC) est raccordé à un central de télécommunications (VST) ,
- le centre d'appel (CC) comprend à la fois un grand ordinateur (CTI) et au moins une position de renseignement (AP) ayant au moins un terminal de télécommunications,
- le grand ordinateur (CTI) est relié au central téléphonique (VST),
- la position de renseignement (AP) est raccordé par des dispositifs de transmission de données au central de télécommunications (VST) et au grand ordinateur (CTI),
- le grand ordinateur (CTI) contrôle en continu que les terminaux de télécommunications y compris la voie de transmission de données qui y mène sont prêts à fonctionner,
- la répartition des appels vers les positions de renseignements (AP1 à APn) se déroule, en fonctionnement sans panne, sur le grand ordinateur (CTI) et,
- la fonction de base de la répartition des appels entrants et l'établissement d'une communication en phonie vers un terminal de télécommunications de la position de renseignement (AP) se déroulent, en cas de panne, dans le central de télécommunications (VST),
**caractérisé**
- **en ce que** le central de télécommunications (VST) contrôle en continu que le grand ordinateur (CTI) et les terminaux de télécommunications, y compris les liaisons de communication y menant sont prêts à fonctionner et identifie une panne se produisant éventuellement,
- **en ce que** le grand ordinateur (CTI) indique au central de télécommunications (VST) une panne se produisant éventuellement des terminaux de télécommunications ou des voies de transmission de données y menant et,
- lorsque les positions de renseignement (AP) ne peuvent pas être atteintes par le grand ordinateur (CTI), le central de télécommunications (VST) effectue au moins la répartition des appels et l'établissement d'une communication en phonie vers un terminal de télécommunications de la position de renseignement (AP).

2. Procédé suivant la revendication 1,
**caractérisé en ce que**, même s'il n'y a pas de panne au moins des indications d'état des positions de renseignements (AP1 à APn) sont traitées dans le centre des télécommunications (VST).

3. Procédé suivant la revendication 1,
**caractérisé en ce qu'**un fonctionnement limité du centre d'appel (CT), dû à une panne au moins partielle de l'ordinateur (CTI) ou d'une ligne sy raccordant, est maintenu par le central de télécommunications (VST) seul jusqu'à ce que le grand ordinateur (CTI) soit prêt à reprendre le fonctionnement normal.

4. Procédé suivant la revendication 1,
**caractérisé en ce que**, si un terminal de télécommunications de la position de renseignement (AP) ne peut pas être atteint, au moins la répartition des appels et l'établissement d'une communication en phonie vers un autre terminal de télécommunications prêt à fonctionner de la même position de renseignement (AP) sont effectués.

5. Centre d'appel (CC) qui est préparé pour effectuer tous les stades d'un procédé suivant la revendication 1 à 4 et
- dans lequel le centre d'appel (CC) est raccordé à un central de télécommunications (VST) ,
- le centre d'appel (CC) comprend à la fois un grand ordinateur (CTI) et au moins une position de renseignement (AP) ayant au moins un terminal de télécommunications,
- le grand ordinateur (CTI) est relié au central téléphonique (VST),
- la position de renseignement (AP) est raccordé par des dispositifs de transmission de données au central de télécommunications (VST) et au grand ordinateur (CTI),
- le grand ordinateur (CTI) comprend des moyens de contrôle en continu que les terminaux de télécommunications, y compris les voies de transmission y menant, sont prêts à fonctionner,
- il est prévu, pour le fonctionnement sans panne dans le grand ordinateur (CTI) des moyens de répartition d'appels vers les positions de renseignements (AP1 à APn), et
- il est prévu, pour le cas de panne, des moyens pour la fonction de base de la répartition des appels entrants et l'établissement d'une communication en phonie vers un terminal de télécommunications de la position de renseignement (AP) dans le centre de télécommunications (VST),
**caractérisé**
- **en ce que** le centre de télécommunications (VST) comprend des moyens de contrôle en continu que le grand ordinateur (CTI) et les terminaux de télécommunications, y compris les liaisons de communication y menant, sont prêts à fonctionner, ainsi que des moyens d'identification d'une panne se produisant éventuellement,
- **en ce que** le grand ordinateur (CTI) comprend des moyens d'indication au centre de télécommunications (VST) d'une panne, se produisant éventuellement, des terminaux de télécommunications ou des voies de transmission de données y menant et,
- **en ce que** le centre de télécommunications (VST) comprend des moyens de répartition d'appels et d'établissement d'une communication en phonie vers un terminal de télécommunications de la position de renseignement (AP), lorsque les positions de renseignements (AP) ne peuvent pas être atteintes par le grand ordinateur (CTI).

6. Centre d'appel (CC) suivant la revendication 5,
**caractérisé en ce qu'**il est prévu, comme terminal de télécommunications de la position de renseignement (AP), un ordinateur personnel (PC) qui comprend des moyens d'entrée vocale et de sortie vocale, des moyens de liaison aux réseaux de télécommunications et des moyens de transmission de données au grand ordinateur (CTI).

7. Centre d'appel (CC) suivant la revendication 5,
**caractérisé en ce qu'**il est prévu, comme terminaux de télécommunications de la position de renseignement (AP), un téléphone (TEL) et un ordinateur personnel (PC) et **en ce que** l'ordinateur personnel (PC) comprend des moyens d'entrée vocale et de sortie vocale, des moyens de liaison aux réseaux de télécommunications et des moyens de transmission de données au grand ordinateur (CTI).

8. Centre d'appel (CC) suivant la revendication 5,
**caractérisé en ce que** le au moins un terminal de télécommunications de la position de renseignement (AP) est relié au centre de télécommunications (VST) par au moins un accès de base RNIS.
